# EUROPÄISCHE PATENTSCHRIFT

(11) **EP 0 451 570 B1**
(45) Veröffentlichungstag und Bekanntmachung des Hinweises auf die Patenterteilung: **18.01.1995**
(21) Anmeldenummer: 91104450.1
(22) Anmeldetag: 21.03.1991
(51) Int. Cl.: B66B 13/14

(54) **Antrieb für eine Aufzugstür**
Drive mechanism for elevator door
Mécanisme d'entraînement pour une porte d'ascenseur

(30) Priorität: 09.04.1990 DE 9004125 U
(43) Veröffentlichungstag der Anmeldung: 16.10.1991
(73) Patentinhaber: SIEMENS AKTIENGESELLSCHAFT, 80333 München (DE)
(72) Erfinder: Rowedda, Volker, Dipl.-Ing., W-3017 Pattensen (DE); Ludwig, Heinz, Dipl.-Ing., W-3008 Garbsen (DE)

(56) Entgegenhaltungen:
- EP-A- 0 162 799
- GB-A- 2 201 811
- US-A- 4 567 411
- US-A- 4 776 433

## Beschreibung

Die Erfindung betrifft einen Antrieb für eine Aufzugstür mit einer Steuer- und Regeleinrichtung für die Türbewegung sowie einem Elektromotor mit Impulsgeber und mit mindestens einem Lageschalter für die Türstellung (siehe GB-A-2201811).

Antriebe für Aufzugstüren sind in den unterschiedlichsten Ausführungen bekannt. Die Steuerung und Regelung der bekannten Antriebe für Aufzugstüren weisen in ihren neuesten Ausführungen Steuer- und Regeleinrichtungen auf, die zusammen mit Lageschaltern und einem Impulsgeber am Elektromotor für die ganz- oder teilautomatische Steuerung und Regelung der Antriebe sorgen. Es ist üblich, daß die Steuer- und Regeleinrichtungen in einem zentralen Schaltschrank angeordnet sind, z.B. über dem Aufzugsschacht. Dies macht lange, störempfindliche Leitungen erforderlich. Auch dezentral an der Fahrstuhlkabine angeordnete Steuerungen und Regelungen für die Aufzugstür sind bekannt, diese Einrichtungen weisen jedoch bisher kaum die für eine derartige Steuerung und Regelung notwendige betriebliche Zuverlässigkeit auf. Darüber hinaus sind hier Änderungen der Türbewegungsabläufe nicht ohne weiteres möglich.

Es ist Aufgabe der Erfindung, einen Antrieb für eine Aufzugstür anzugeben, der eine Steuer- und Regeleinrichtung für die Türbewegung aufweist, bei der die bisherigen Nachteile vermieden werden und die insbesondere störunempfindlich ist. Dabei soll eine leichte Änderbarkeit möglich sein. Die Aufgabe wird dadurch gelöst, daß die Steuer- und Regeleinrichtung einen elektronischen, programmierbaren Logikbaustein (EPLD) aufweist, der als Matrix von Schaltelementen ausgebildet ist , die untereinander nach Wahl verbindbar und trennbar sind, so daß der Ablauf der Steuerung und Regelung änderbar ist. Durch eine derartige Ausbildung ergibt sich sehr vorteilhaft eine Zusammenfassung der Steuerlogik auf einem elektronischen Baustein, der aufwandsarm mit dem gleichen Ergebnis wie eine Festverdrahtung arbeitet, darüber hinaus aber leicht änderbar ist. Weiterhin ergibt sich ein bisher unerreicht geringer Platzbedarf bei einfachem Einbau. Die Betriebssicherheit liegt noch über einer Festverdrahtung, da deren störanfällige Verbindungen vermieden werden.

In Ausgestaltung der Erfindung ist vorgesehen, daß die Steuerlogik (EPLD) auf eine Vierquadrantenregelung wirkt, die Speicherelemente für Geschwindigkeits- und Drehmomentvorgaben aufweist. Die Vierquadrantenregelung ist über eine Strombegrenzung mit Pulsbreiten-Modulation mit einer Brückenendstufe verbunden, die als Transistorschalter für die Drehrichtungen und Drehmomentrichtungen des Elektromotors ausgebildet ist. Hierdurch ergibt sich eine auf einer relativ kleinen Platine unterbringbare, mit bekannten elektronischen Bauelementen arbeitende Regelung und Steuerung für den Antrieb einer Aufzugstür, die einen vorwählbar sanften Anlauf der Türöffnungsbewegung und ein ebensolches Abbremsen ermöglicht.

Zusammen mit einer Einheit zur Richtungserkennung und einer Blockiererkennung, z.B. durch Auswertung der eintreffenden Impulse, sowie Eingangsfiltern, diese Elemente können ebenfalls auf der gleichen Platine wie die Steuerlogik untergebracht werden, ergibt sich erfindungsgemäß eine insgesamt bisher unerreicht günstige Steuerung und Regelung des Antriebs für eine Aufzugstür.

Weitere Vorteile und Einzelheiten der Erfindung ergeben sich aus der nachfolgenden Beschreibung eines Ausführungsbeispiels, anhand der Zeichnung und in Verbindung mit den Unteransprüchen. Dabei zeigen:
- FIG 1: einen schematisiert dargestellten Antrieb für eine Aufzugstür, und
- FIG 2: ein Blockschaltbild der erfindungsgemäßen Steuer- und Regeleinrichtung.

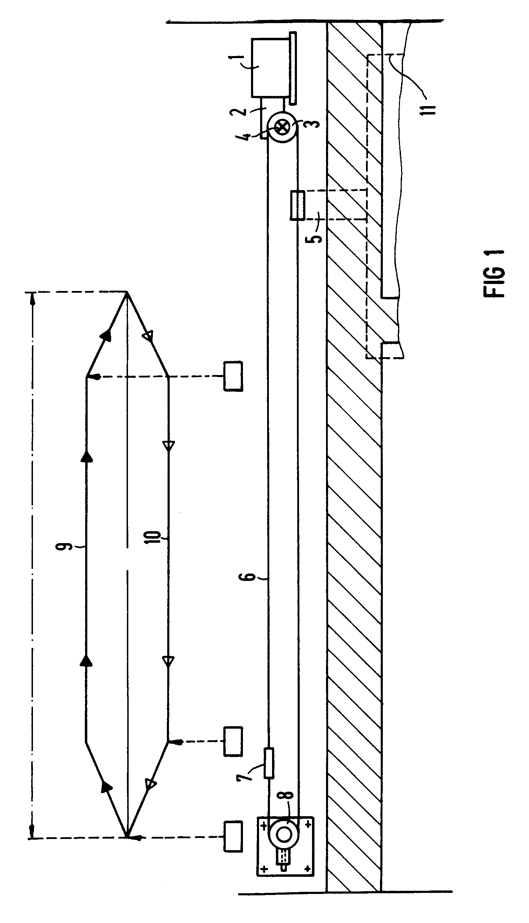

In FIG 1 bezeichnet 1 den Motor für den Antrieb der Aufzugstür. An den Motor 1 ist vorteilhaft ein Getriebe 2 mit einem Impulsgeber 3 für die Bewegung der Treibscheibe 4 angeflanscht. Zwischen der Treibscheibe 4 und der Umlenkscheibe 8 erstreckt sich ein Zahnriemen oder ein Seil 6 mit einem Verschluß 7. An dem Zahnriemen oder dem Seil 6 ist ein Mitnehmer 5 für das nur strichliert gezeichnete Türblatt 11 der Aufzugstür angeordnet. An diesem Mitnehmer 5 oder einer beliebigen anderen Stelle des Zahnriemens oder Seils 6 sind ein oder mehrere Kontaktkörper für die Betätigung von Lageschaltern angeordnet. In entsprechender Weise können auch zentralöffnende Türblätter betätigt werden.

Das Fahrverhalten des erfindungsgemäßen Antriebs ist in den mit Pfeilen versehenen Linienzügen 9 und 10 gezeigt, aus denen der vorteilhafte Sanftanlauf und das sanfte Abbremsen zu ersehen ist. Die Mittellinie zwischen den Linien 9 und 10 bezeichnet dabei die Geschwindigkeit 0. Der gezeigte Geschwindigkeitsverlauf ist besonders einfach realisierbar, es versteht sich jedoch, daß auch abweichende, z.B. in den Endbereichen kleinere und im mittleren Teil höhere Geschwindigkeiten, ohne weiteres einprogrammierbar sind. Auch fahrtrichtungsabhängige Geschwindigkeiten sind einprogrammier- oder mit einem Stellknopf einstellbar.

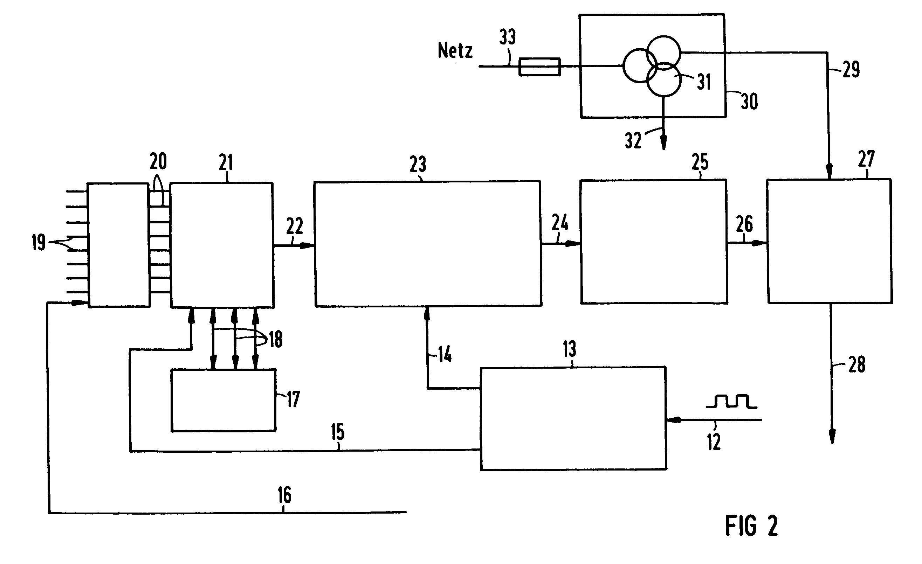

In FIG 2 bezeichnet 12 das Signal des in dieser Darstellung nicht gezeigten Impulsgebers, dessen Digitalität angedeutet ist. Das Signal 12 des Impulsgebers gelangt in das Erkennungssystem 13, das mit einer Frequenz/Spannungsumwandlung für das Ausgangssignal 14 und eine Signalaufbereitung für die Signale auf dem Leitungsweg 15 versehen ist. Die Signale 15 werden ebenso wie die Signale 18 aus einem Zeitglied 17 dem Logikbaustein 21 aufgegeben, der als Electrical Programmable Logic Device (EPLD) ausgeführt ist.

In den Logikbaustein 21 gelangen auch die externen Eingangssignale, z.B. von der überlagerten Aufzugssteuereinheit und die Signale 16 von den nichtgezeigten Lageschaltern. Die gefilterten Signale 20 bilden zusammen mit den Signalen 15 aus der Richtungserkennung und Blockiererkennung 13 und den Signalen 18 des Zeitgliedes 17 die Eingangssignale des Logikbausteins 21, der daraus ein Signal 22 für die Steuerung der Aufzugstür bildet. Der Logikbaustein 21 kann einteilig oder mehrteilig ausgeführt sein. Das Signal 22 wird einer Vierquadrantenregelung 23 aufgegeben, die auch die Geschwindigkeits- und Drehmomentvorgaben berücksichtigt. Die Vierquadrantenregelung 23 gibt ein Signal 24 an die Strombegrenzung mit Pulsbreiten-Modulation 25 ab, deren Signal 26 der Transistor-Brücken-Endstufe 27 aufgegeben wird. Die Brücken-Endstufe 27 gibt ihrerseits eine dem gewünschten Motorverhalten entsprechenden Strom über die Leitung 28 ab. Dieser gelangt in die Brücken-Endstufe 27 über den Weg 29 aus dem Transformator 31 im Eingangsteil 30. Der Netzeingang für die Einheit 30 ist mit 33 bezeichnet. Die Einheit 30 steht über die Spannungsversorgung 32 für die elektronischen Bausteine mit der Steuerung und Regelung in Verbindung.

Der Logikbaustein 21 enthält vorteilhaft auch eine Betriebsartenumschaltung, die Signale der überlagerten Aufzugssteuerung verarbeitet, so daß auch eine Fernsteuerung möglich ist. Auch Sonderbetriebsarten, z.B. mit einer kapazitiven Sensorleiste sind möglich. Der Logikbaustein 21 selbst weist nach einem Matrixschema verteilte elektronische Logikelemente auf, deren Leiterbahnen über elektrische Impulse miteinander verknpüft oder unterbrochen werden können. So ist einerseits eine betriebssichere Funktionsweise des Logikbausteins möglich, andererseits kann aber auch der Ablauf der Steuerung und Regelung jederzeit einfach geändert werden. Ein solcher Logikbaustein eignet sich daher besonders für die Berücksichtigung kundenspezifischer Wünsche und für Aufzüge, bei denen Änderungen zu erwarten sind.

## Patentansprüche

1. Antrieb für eine Aufzugstür mit einer Steuer- und Regeleinrichtung für die Türbewegung sowie einem Elektromotor mit Impulsgeber und mit mindestens einem Lageschalter für die Türstellung, **dadurch gekennzeichnet,** daß die Steuer- und Regeleinrichtung einen elektronischen, programmierbaren Logikbaustein (EPLD) (21) aufweist, der als Matrix von Schaltelementen ausgebildet ist, die untereinander nach Wahl verbindbar und trennbar sind, so daß der Ablauf der Steuerung und Regelung änderbar ist.

2. Antrieb nach Anspruch 1, **dadurch gekennzeichnet,** daß der Logikbaustein (EPLD) (21) mit einer Vierquadrantenregelung (23) verbunden ist, die Speicherelemente für Geschwindigkeits- und Drehmomentvorgaben aufweist.

3. Antrieb nach Anspruch 1 oder 2, **dadurch gekennzeichnet,** daß der Logikbaustein (EPLD) (21) eine Wirkverbindung über die Vierquadrantenregelung (23) und eine Strombegrenzung mit Pulsbreiten-Modulation (25) zu einer Brücken-Endstufe (27) aufweist.

4. Antrieb nach Anspruch 3, **dadurch gekennzeichnet,** daß die Brücken-Endstufe (27) als Transistorschalter für die Drehrichtungen und Drehmomentrichtungen des Elektromotors (1) ausgebildet ist.

5. Antrieb nach Anspruch 1, 2, 3 oder 4, **dadurch gekennzeichnet,** daß der Impulsgeber (3) des Elektromotors (1) eine Wirkverbindung über eine Auswerteschaltung (13), in der eine Richtungserkennung, eine Blockierungserkennung und eine Frequenz-Spannungswandlung stattfindet, sowohl zum Logikbaustein (EPLD) (21) als auch zur Vierquadrantenregelung (23) aufweist.

6. Antrieb nach Anspruch 1, 2, 3, 4 oder 5, **dadurch gekennzeichnet,** daß die Signale (16) der Türlageschalter sowie die externen Schaltsignale (19), z.B. der überlagerten Aufzugssteuerung, dem Logikbaustein (EPLD) (21) über Eingangsfilter eingegeben sind.

7. Antrieb nach einem oder mehreren der vorhergehenden Ansprüche, **dadurch gekennzeichnet,** daß der Logikbaustein (EPLD) (21) durch, z.B. elektrische Impulse, in einem Leiterbahnensystem verbindbare und trennbare elektronische Logikelemente, wie UND-Glieder, ODER-Glieder etc., aufweist.

## Claims

1. Drive mechanism for a lift door with a control and regulation device for the door movement as well as an electric motor with pulse generator and with at least one position switch for the door position, characterized in that the control and regulation device has an electronic programmable logic module (EPLD) (21), which is in the form of a matrix of switching elements which can be connected together and separated from each other as desired so that the process of the control and regulation can be changed.

2. Drive mechanism according to Claim 1, characterized in that the logic module (EPLD) (21) is connected to a four-quadrant control (23) which has storage elements for speed and torque requirements.

3. Drive mechanism according to Claim 1 or 2, characterized in that the logic module (21) has an active connection via the four-quadrant control (23) and a current limiter with pulse width modulation (25) to a bridge output stage (27).

4. Drive mechanism according to Claim 3, characterized in that the bridge output stage (27) is in the form of a transistor switch for the rotational directions and torque directions of the electric motor (1).

5. Drive according to Claim 1, 2, 3 or 4, characterized in that the pulse generator (3) of the electric motor (1) has an active connection via an evaluation circuit (13) in which a direction recognition, a blocking recognition and a frequency/voltage conversion takes place, both to the logic module (EPLD) (21) and to the four-quadrant control (23).

6. Drive mechanism according to Claim 1, 2, 3, 4 or 5, characterized in that the signals (16) from the door position switches as well as the external switching signals (19), e.g. from the superposed lift control, are inputted to the logic module (EPLD) (21) via input filters.

7. Drive mechanism according to one or more of the preceding Claims, characterized in that the logic module (EPLD) (21) has electronic logic elements, such as AND elements, OR elements etc., which can be connected and separated in a conductor path system by means, for example, of electrical pulses.

## Revendications

1. Dispositif d'entraînement pour une porte d'ascenseur, comportant un dispositif de commande et de régulation pour le déplacement de la porte ainsi qu'un moteur électrique comportant un générateur d'impulsions et au moins un interrupteur de position pour la position de la porte, caractérisé par le fait que le dispositif de commande et de régulation possède un module logique électronique programmable (EPLD) (21), réalisé sous la forme d'une matrice d'éléments de commutation, qui peuvent, au choix, être reliés entre eux et déconnectés les uns des autres de sorte que l'exécution de la commande et de la régulation peut être modifiée.

2. Dispositif d'entraînement suivant la revendication 1, caractérisé par le fait que le module logique (EPLD) (21) est relié à un système de régulation à quatre quadrants (23), qui comporte des éléments de mémoire pour des prescriptions de vitesse et de couple.

3. Dispositif d'entraînement suivant la revendication 1 ou 2, caractérisé par le fait que le module logique (EPLD) (21) comporte une liaison active passant par le système de régulation à quatre quadrants (23) et un système de limitation du courant avec une unité de modulation d'impulsions en durée (25) pour former un étage final en pont (27).

4. Dispositif d'entraînement suivant la revendication 3, caractérisé par le fait que l'étage final en pont (27) est réalisé sous la forme d'un interrupteur à transistors pour les sens de rotation et les directions du couple du moteur électrique (1).

5. Dispositif d'entraînement suivant la revendication 1, 2, 3 ou 4, caractérisé par le fait que le générateur d'impulsions (3) du moteur électrique (1) est relié selon une liaison active aussi bien au module logique (EPLD) (21) qu'au système de régulation à quatre quadrants (23), par l'intermédiaire d'un circuit d'évaluation (13), dans lequel s'effectuent une identification de sens, une identification de blocage et une conversion fréquence-tension.

6. Dispositif d'entraînement suivant la revendication 1, 2, 3, 4 ou 5, caractérisé par le fait que les signaux (16) de l'interrupteur de position de porte ainsi que les signaux externes de commutation (19), par exemple de l'unité de commande superposée d'ascenseur, sont envoyés au module logique (EPLD) (21) par l'intermédiaire de filtres d'entrée.

7. Dispositif d'entraînement suivant une ou plusieurs des revendications précédentes, caractérisé par le fait que le module logique (EPLD) (21) comporte des éléments logiques électroniques, tels que des circuits ET, des circuits OU, etc., qui peuvent être reliés et séparés par exemple par des impulsions électriques, dans un système de voies conductrices.
